# EUROPEAN PATENT APPLICATION

(11) **EP 3 843 503 A1**
(43) Date of publication of application: **30.06.2021**
(21) Application number: 20170039.0
(22) Date of filing: 17.04.2020
(51) Int. Cl.: H05B 6/06

(54) **CIRCUIT FOR CONTROLLING ELECTROMAGNETIC INDUCTION**

(30) Priority: 28.10.2019 CN 201911027916
(71) Applicant: Liu, Tuanfang, 518000 Shenzhen, Guangdong (CN)
(72) Inventor: The designation of the inventor has not yet been filed
(74) Representative: Niburska, Danuta

(57) **Abstract**

A circuit for controlling electromagnetic induction, including: a charging circuit, a battery, an integrated control circuit, an LED indication circuit, a buck-boost circuit, an inductor-capacitor (LC) circuit, and an induction heating circuit. The charging circuit is configured to supply a charging voltage and a charging current for the battery. The integrated control circuit is configured to detect a voltage of the battery, and the LED indication circuit is directly connected to the integrated control circuit to indicate the power state of the battery. The battery is directly connected to the buck-boost circuit and the buck-boost circuit is configured to step up an input voltage from the battery. The input voltage is stepped up and stepped-up voltage is output to the LC circuit whereby producing an electromagnetic wave, an alternating voltage and an alternating current. The alternating voltage and the alternating current are output to the induction heating circuit.

## Description

The disclosure relates to a circuit for controlling electromagnetic induction.

Electromagnetic is the production of an electromotive force (i.e., voltage) across an electrical conductor in a changing magnetic field. Electromagnetic induction has found many applications, for example, heating an object.

Conventional electromagnetic induction circuits have a relatively low output power. As a result, the electromagnetic induction heaters equipped with the electromagnetic induction circuits exhibit a relatively low heating efficiency.

The disclosure provides a control circuit comprising a charging circuit, a battery, an integrated control circuit, an LED indication circuit, a buck-boost circuit, an inductor-capacitor (LC) circuit, and an induction heating circuit. The charging circuit is configured to supply a charging voltage and a charging current for the battery; the integrated control circuit is configured to detect a voltage of the battery, and the LED indication circuit is directly connected to the integrated control circuit to indicate a power state of the battery; the battery is directly connected to the buck-boost circuit and the buck-boost circuit is configured to step up an input voltage from the battery; the input voltage is stepped up and stepped-up voltage is output to the LC circuit where an electromagnetic wave, an alternating voltage and an alternating current are produced; and the alternating voltage and the alternating current are output to the induction heating circuit to produce an induced magnetic field and an eddy current to heat an object.

The charging circuit can be configured to transform an electric supply of 220 V/23 A into a 5 V/1 A DC charging voltage and charging current input to the battery; and two 3.7 V batteries connected in series can be employed.

When the battery can be lower than a preset value, the integrated control circuit transmits a signal with regard to the power state of the battery to the LED indication circuit and the charging circuit; the LED indication circuit presents the signal, and the charging circuit receives the signal and starts charging the battery.

The buck-boost circuit can be a boosting transformer configured to boost the input voltage from the battery.

The LC circuit can comprise an inductor and a capacitor and can be configured to transform a DC voltage into high frequency alternating voltage and alternating current.
FIG. **1** is a circuit block diagram of a circuit for controlling electromagnetic induction according to one embodiment of the disclosure;
FIGS. **2A-2I** are circuit diagrams of a circuit for controlling electromagnetic induction according to one embodiment of the disclosure; specifically,

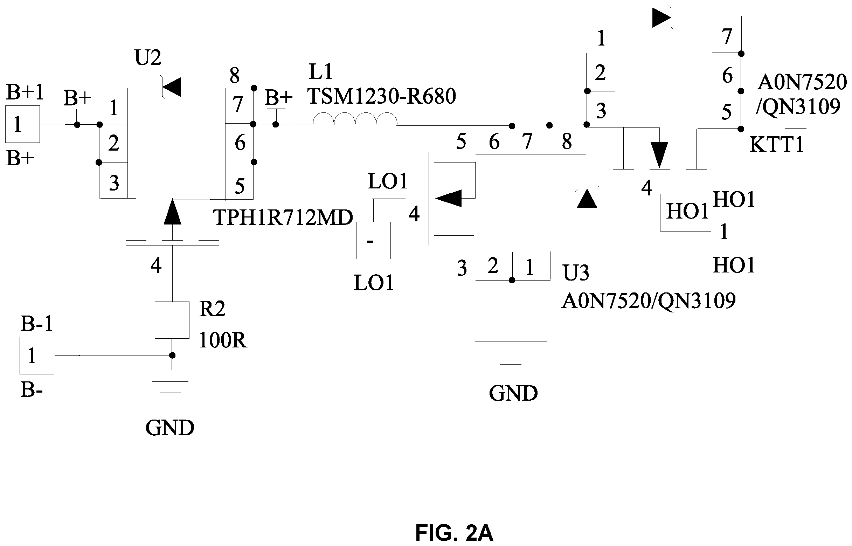

FIG. **2A** **is a** connection diagram of U3;

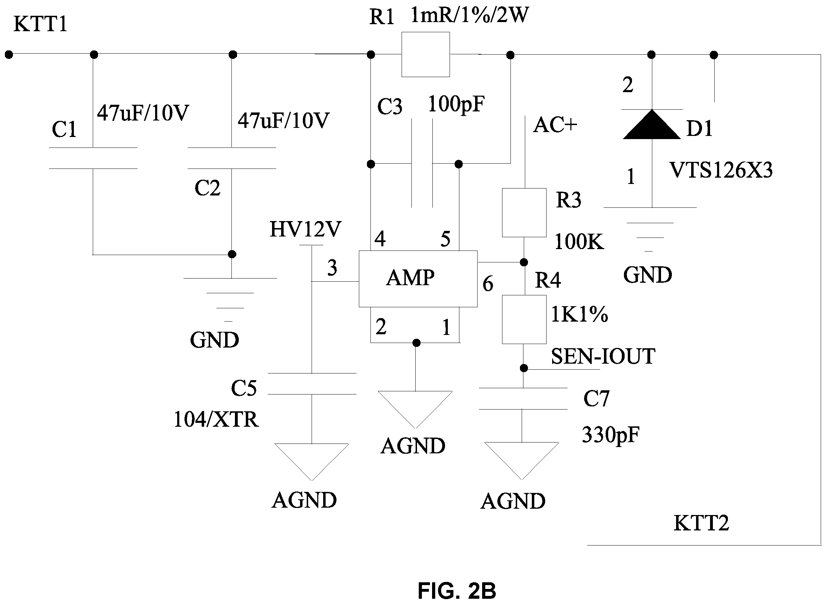

FIG. **2B** is a connection diagram of AMP;

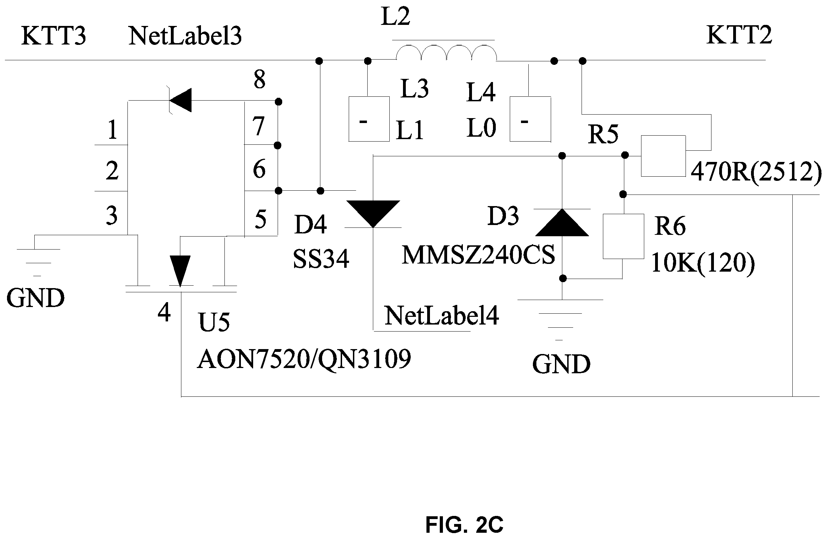

FIG. **2C** is a connection diagram of U5;

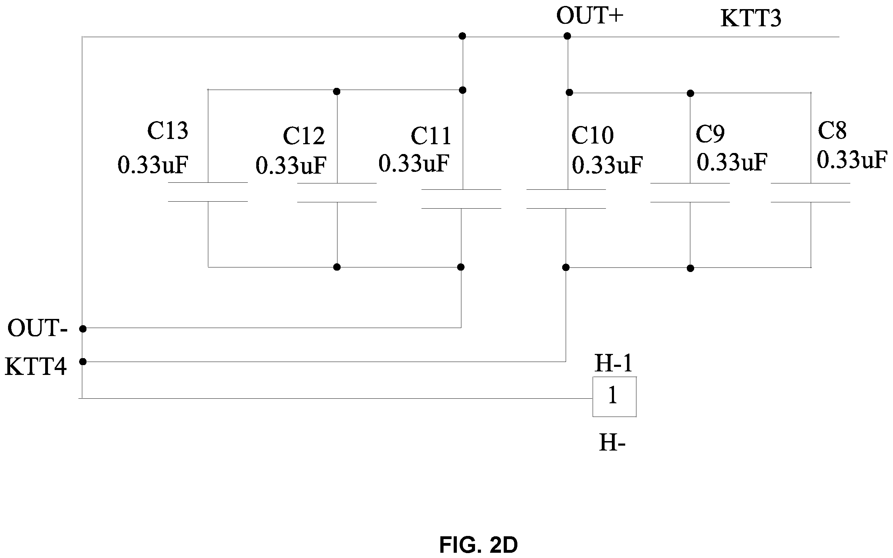

FIG. **2D** is a connection diagram of LC;

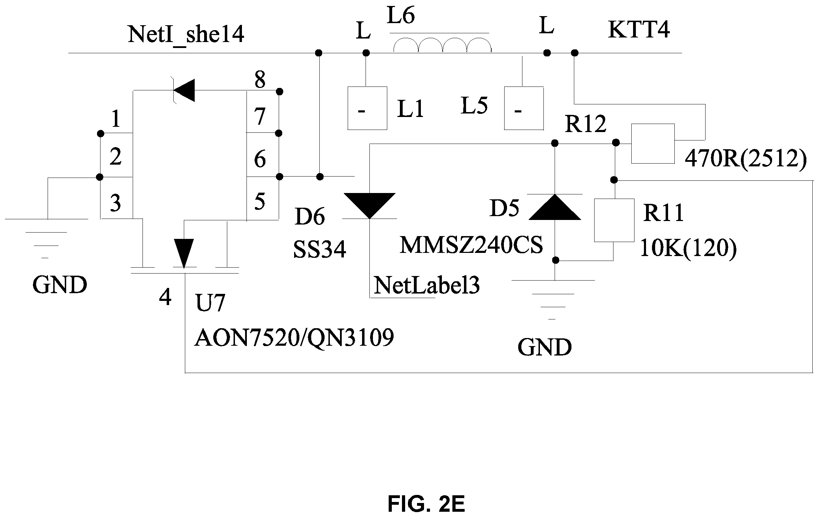

FIG. **2E** is a connection diagram of U7;

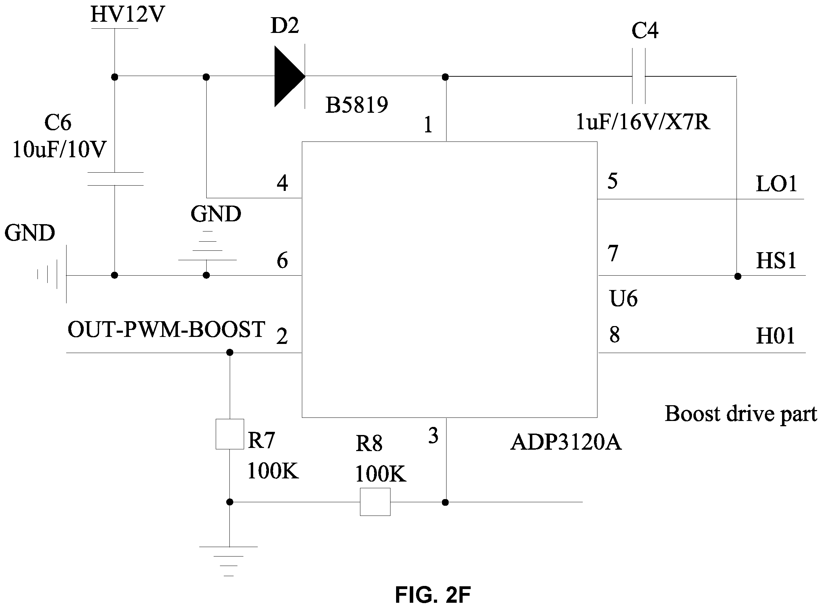

FIG. **2F** is a connection diagram of U6;

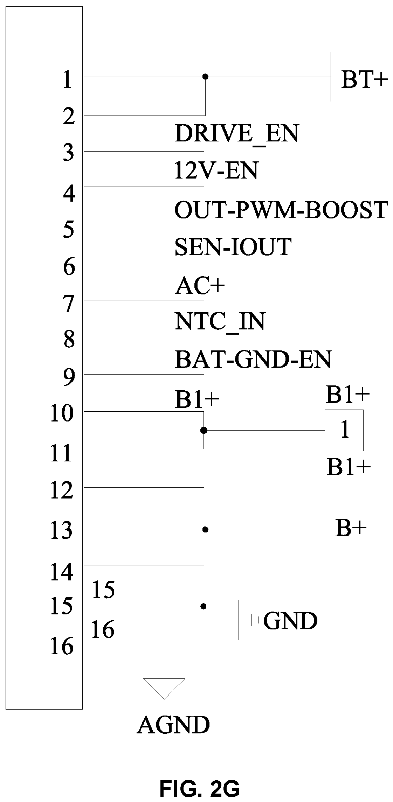

FIG. **2G** is a connection diagram of AC;

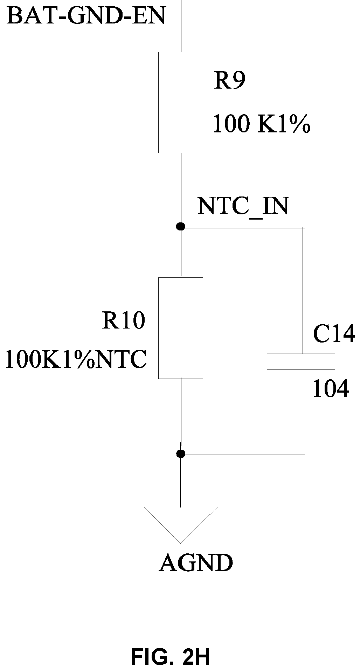

FIG. **2H** is a connection diagram of D7;

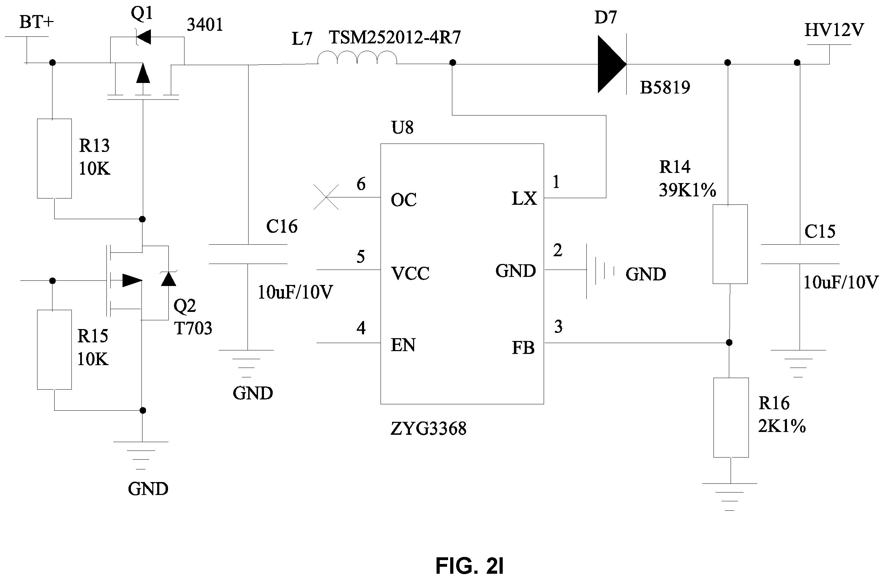

FIG. **2I** is a connection diagram of U8;

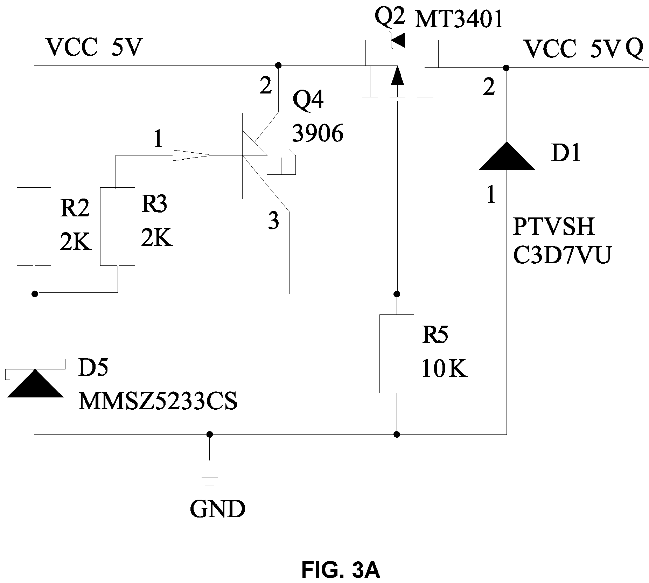

FIGS. **3A-3P** are circuit diagrams of a circuit for controlling electromagnetic induction according to another embodiment of the disclosure; specifically,
FIG. **3A** is a connection diagram of Q2;

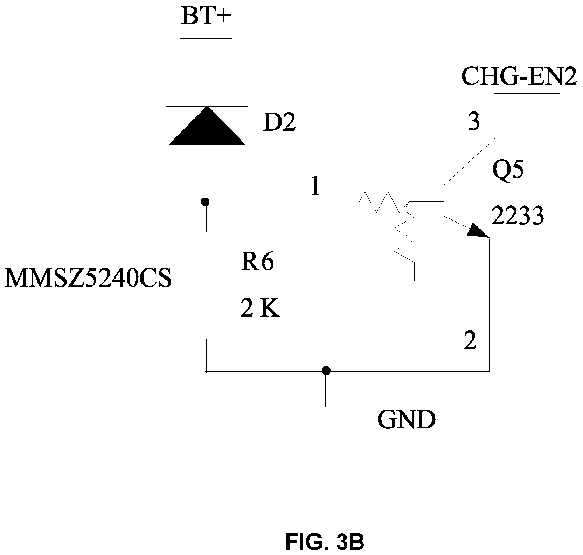

FIG. **3B** is a connection diagram of Q5;

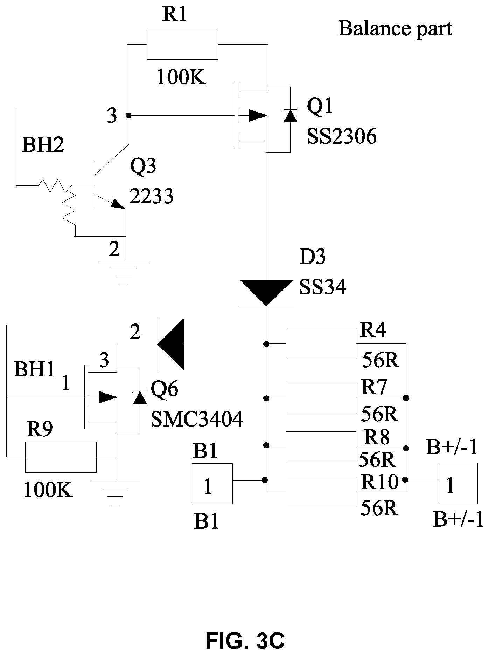

FIG. **3C** is a connection diagram of Q7;

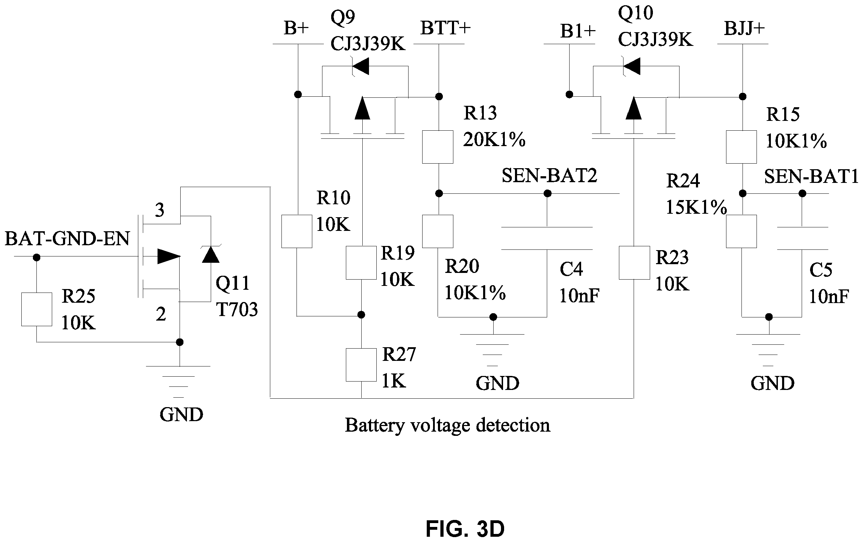

FIG. **3D** is a connection diagram of Q9;

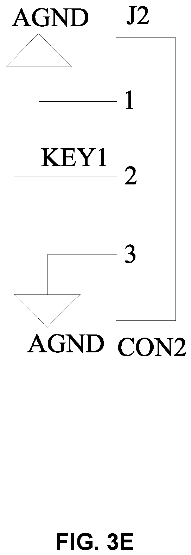

FIG. **3E** is a connection diagram of C8;

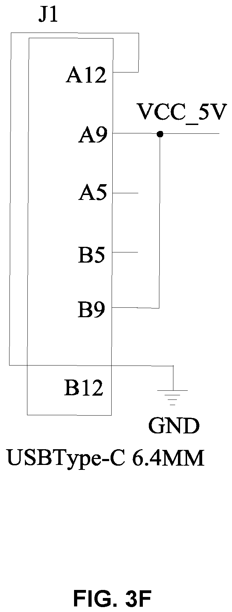

FIG. **3F** is a connection diagram of USB;

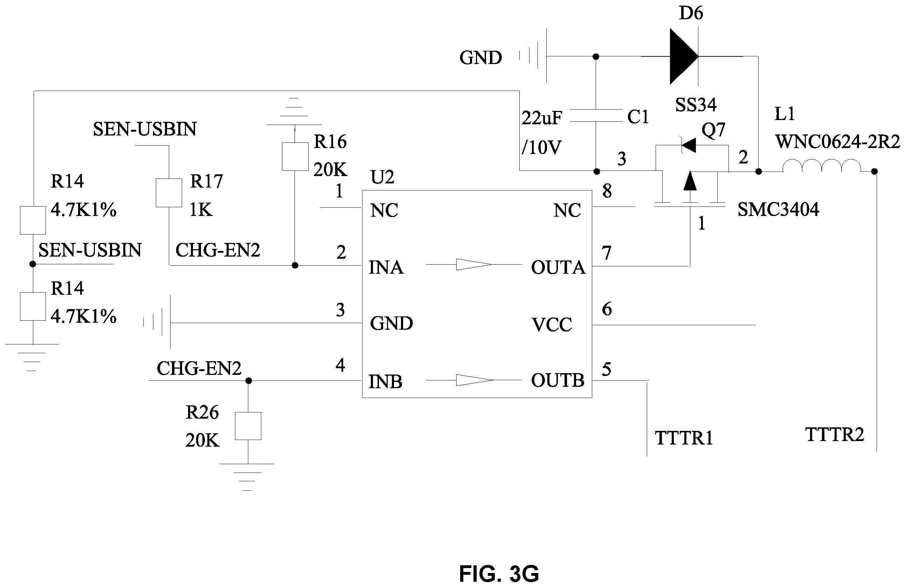

FIG. **3G** is a connection diagram of U2;

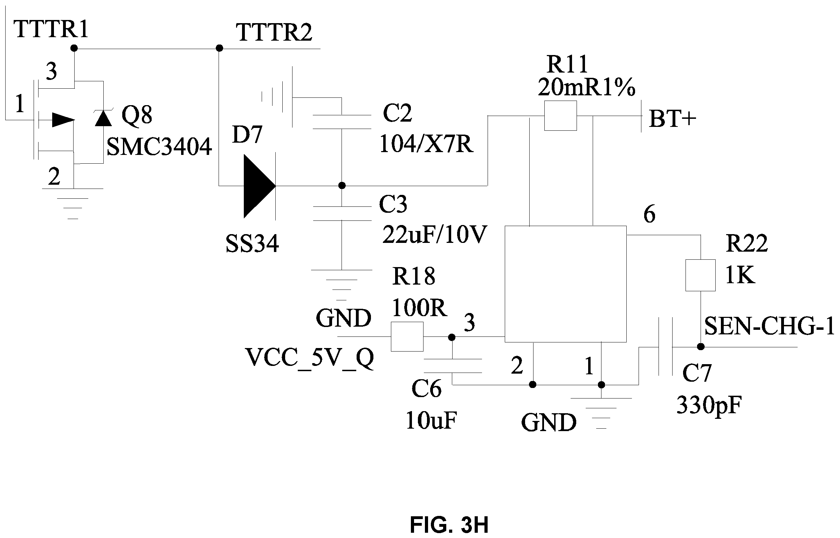

FIG. **3H** is a connection diagram of Q8;

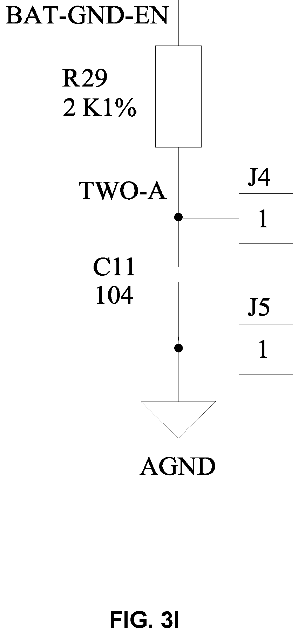

FIG. **3I** is a connection diagram of C11;

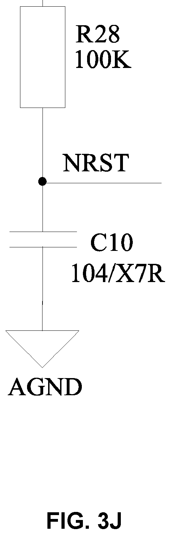

FIG. **3J** is a connection diagram of C10;

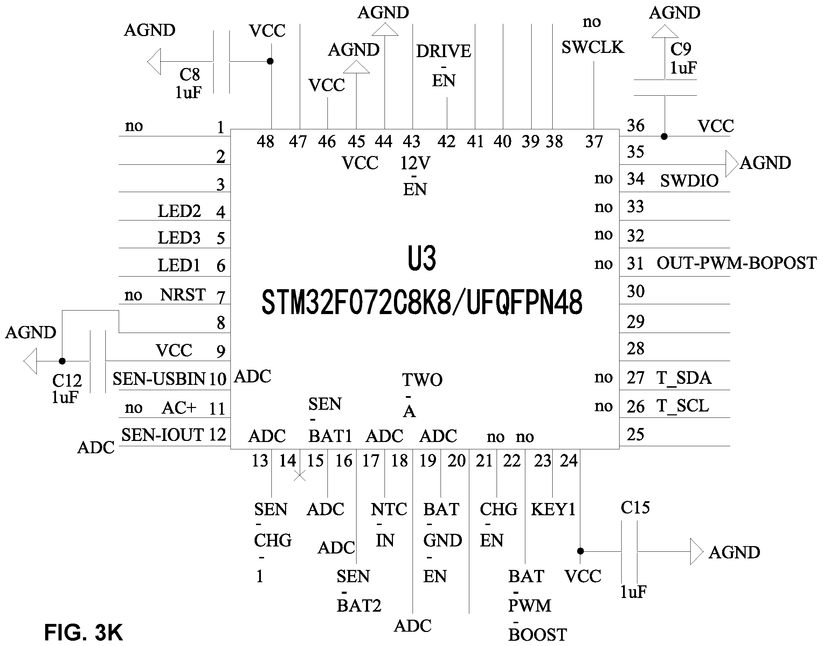

FIG. **3K** is a connection diagram of CPU;

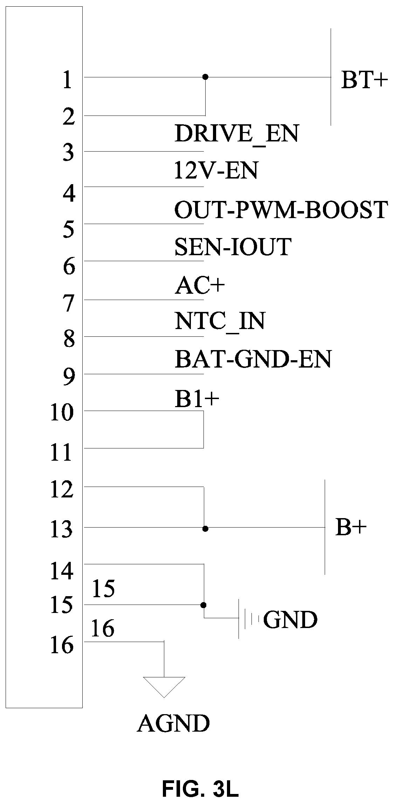

FIG. **3L** is a connection diagram of AC;

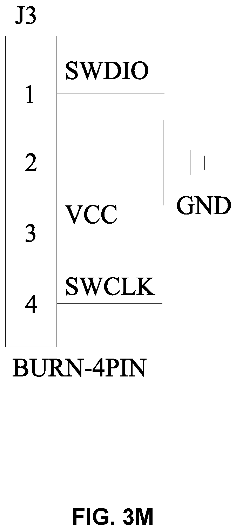

FIG. **3M** is a connection diagram of VCC;

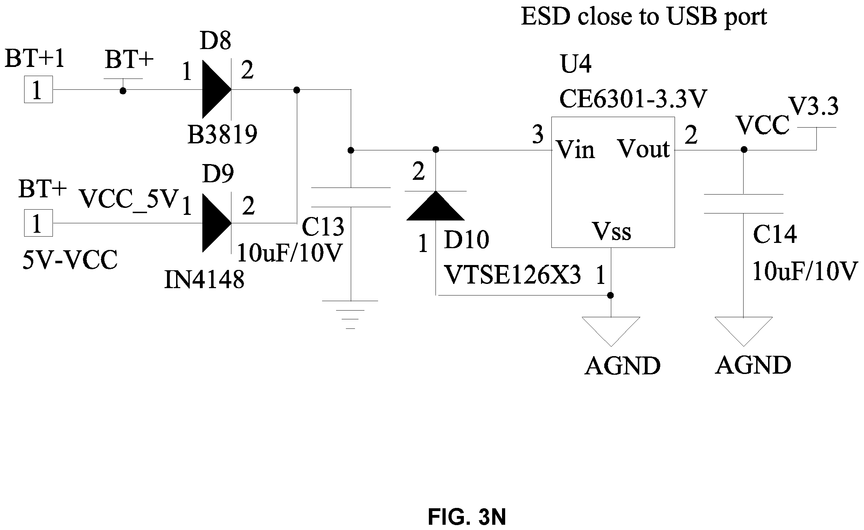

FIG. **3N** is a connection diagram of U4;

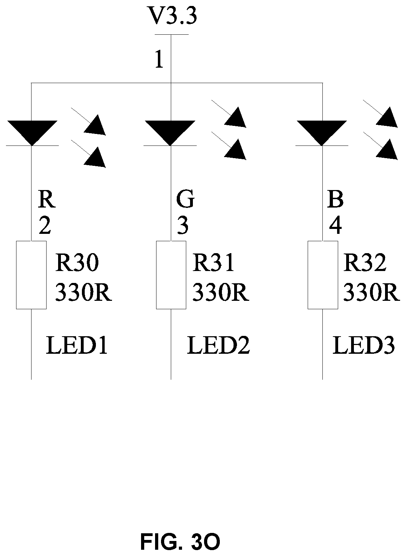

FIG. **3O** is a connection diagram of LED; and

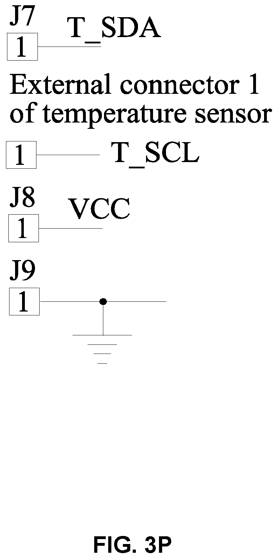

FIG. **3P** is a connection diagram of TPS.

To further illustrate, embodiments detailing a control circuit are described below. It should be noted that the following embodiments are intended to describe and not to limit the disclosure.

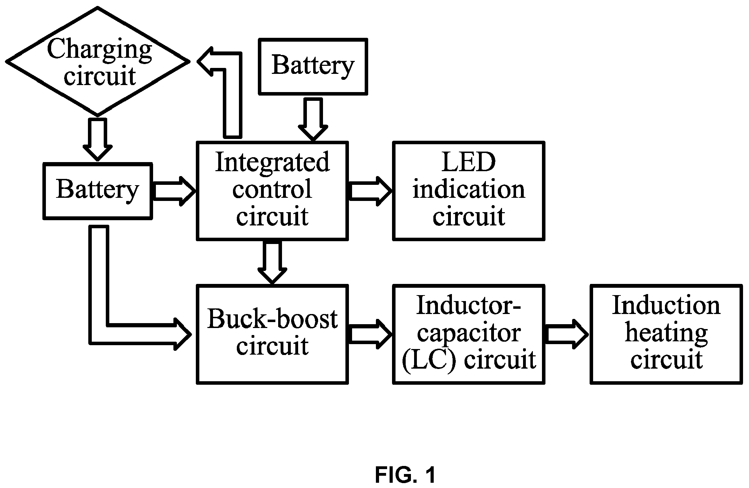

As shown in FIGS. **1****,** **2A-2I****,** and **3A-3P****,** a control circuit comprises a charging circuit, a battery, an integrated control circuit, an LED indication circuit, a buck-boost circuit, an inductor-capacitor (LC) circuit, and an induction heating circuit. The charging circuit is configured to supply a charging voltage and a charging current for the battery; the integrated control circuit is configured to detect a voltage of the battery, and the LED indication circuit is directly connected to the integrated control circuit to indicate a power state of the battery; the battery is directly connected to the buck-boost circuit and the buck-boost circuit is configured to step up an input voltage from the battery; the input voltage is stepped up and stepped-up voltage is output to the LC circuit where an electromagnetic wave, an alternating voltage and an alternating current are produced; and the alternating voltage and the alternating current are output to the induction heating circuit to produce an induced magnetic field and an eddy current to heat an object. The electromagnetic induction effect will occur in the induction heating circuit, and the electromagnetic energy will be converted into heat energy to heat the object.

The charging circuit is configured to transform an electric supply of 220 V/23 A into a 5 V/1 A DC charging voltage and charging current input to the battery; and two 3.7 V batteries connected in series are employed. Under full power condition, 8.4 V voltage can be input to supply power to the integrated control circuit and other circuits.

When the battery is lower than a preset value, the integrated control circuit transmits a signal with regard to the power state of the battery to the LED indication circuit and the charging circuit; the LED indication circuit presents the signal, and the charging circuit receives the signal and starts charging the battery.

The buck-boost circuit is a boosting transformer configured to boost the input voltage from the battery.

The LC circuit comprises an inductor and a capacitor and is configured to transform a DC voltage into high frequency alternating voltage and alternating current.

The alternating voltage and current output from the LC circuit produce an induction magnetic field in the induction heating circuit and form an eddy current, and the conductor is heated in the induction heating circuit by the electromagnetic induction effect, which means the electromagnetic energy is converted into thermal energy.

It will be obvious to those skilled in the art that changes and modifications may be made, and therefore, the aim in the appended claims is to cover all such changes and modifications.

## Claims

1. A circuit for controlling electromagnetic induction, comprising:
1) a charging circuit;
2) a battery;
3) an integrated control circuit;
4) an LED indication circuit;
5) a buck-boost circuit;
6) an inductor-capacitor (LC) circuit; and
7) an induction heating circuit;
wherein:
the charging circuit is configured to supply a charging voltage and a charging current for the battery;
the integrated control circuit is configured to detect a voltage of the battery, and the LED indication circuit is directly connected to the integrated control circuit to indicate a power state of the battery;
the battery is directly connected to the buck-boost circuit and the buck-boost circuit is configured to step up an input voltage from the battery; the input voltage is stepped up and stepped-up voltage is output to the LC circuit where an electromagnetic wave, an alternating voltage and an alternating current are produced; and
the alternating voltage and the alternating current are output to the induction heating circuit to produce an induced magnetic field and an eddy current to heat an object.

2. The circuit of claim 1, wherein the charging circuit is configured to transform an electric supply of 220 V/23 A into a 5 V/1 A DC charging voltage and charging current input to the battery; and two 3.7 V batteries connected in series are employed.

3. The circuit of claim 1, wherein when the battery is lower than a preset value, the integrated control circuit transmits a signal with regard to a power state of the battery to the LED indication circuit and the charging circuit; the LED indication circuit presents the signal, and the charging circuit receives the signal and starts charging the battery.

4. The circuit of claim 1, wherein the buck-boost circuit is a boosting transformer configured to boost the input voltage from the battery.

5. The circuit of claim 1, wherein the LC circuit comprises an inductor and a capacitor and is configured to transform a DC voltage into high frequency alternating voltage and alternating current.
